# EUROPEAN PATENT APPLICATION

(11) **EP 4 671 205 A1**
(43) Date of publication of application: **31.12.2025**
(21) Application number: 24846031.3
(22) Date of filing: 24.07.2024
(51) Int. Cl.: C01B 32/174, H01M 4/62

(54) **CARBON NANOTUBE DISPERSION SOLUTION AND PREPARATION METHOD THEREFOR**

(30) Priority: 26.07.2023 KR 20230097140; 26.07.2023 KR 20230097142; 26.07.2023 KR 20230097145
(71) Applicant: LG Chem, Ltd., Seoul 07336 (KR)
(72) Inventor: WOO, Yu Jin, Daejeon 34122 (KR); JANG, Youngjin, Daejeon 34122 (KR); JUN, Jaemoon, Daejeon 34122 (KR); CHOE, Junho, Daejeon 34122 (KR); YOON, Kiyoul, Daejeon 34122 (KR); HWANG, Jinyoung, Daejeon 34122 (KR); KIM, Eunhee, Daejeon 34122 (KR); KIM, Kyungsu, Daejeon 34122 (KR); JANG, Heechan, Daejeon 34122 (KR)
(74) Representative: Hoffmann Eitle
(86) International application number: PCT/KR2024/010691
(87) International publication number: WO 2025/023729

(57) **Abstract**

Provided is a carbon nanotube dispersion comprising carbon nanotubes, dispersants and a solvent. The dispersants comprise a first dispersant comprising a first polymer compound containing an amine group, and a second dispersant comprising a second polymer compound containing an aromatic ring. The second dispersant contains aromatic carbon in an amount of 65 mol% or more based on the total number of moles of carbon atoms. The carbon nanotube dispersion according to one embodiment of the present invention can significantly reduce not only the initial viscosity of the carbon nanotube dispersion but also the rate of change in viscosity over time by containing a specific level or more of aromatic carbon in the second dispersant.

## Description

### [Technical Field]

The present invention relates to carbon nanotube dispersion and its preparation method. Specifically, the present invention relates to a carbon nanotube dispersion, which comprises a first dispersant comprising a first polymer compound containing an amine group and a second dispersant comprising a second polymer compound containing an aromatic ring, to improve the dispersibility of carbon nanotubes, and its preparation method.

The present application claims the benefits of priorities based on Korean Patent Application No. 10-2023-0097140, Korean Patent Application No. 10-2023-0097142 and Korean Patent Application No. 10-2023-0097145, filed on July 26, 2023, and includes all the contents of which are incorporated as part of this specification.

### [Background Art]

As the technology development and demand for mobile devices increase, the demand for secondary batteries as an energy source is rapidly increasing. Among these secondary batteries, lithium secondary batteries with high energy density and voltage, long cycle lifetime, and low self-discharging rate have been commercialized and are widely used. In addition, research has been actively conducted on a method for manufacturing an electrode with a higher energy density per unit volume as the electrode for a high-capacity lithium secondary battery by improving the electrode density.

In general, high-density electrodes are formed by molding electrode active material particles with a size of several µm to several tens µm using a high-pressure press. However, during the molding process, the particles may be deformed and the space between the particles may be reduced, which may easily reduce the electrolyte solution permeability. In order to solve the above problems, an electrically conductive material having excellent electrical conductivity and strength is used during the manufacture of electrodes. Even when the electrically conductive materials are positioned between electrode active materials, and go through a molding process, they maintain micropores between active material particles, thereby allowing the electrolyte solution to easily penetrate, and have excellent electrical conductivity, thereby reducing resistance within the electrode. Among these electrically conductive materials, the use of carbon nanotubes, which are fiber-type carbon-based electrically conductive materials that can further reduce electrode resistance by forming an electrically conductive path within the electrode, is increasing.

The carbon nanotube is a micro carbon fiber in which carbons connected by hexagonal rings form a long tube-shaped structure with a diameter of 1µm or less. Due to the high electrical conductivity, tensile strength, and heat resistance caused by the specific structure of the carbon nanotube, it is expected to be applied and commercialized in various fields. The carbon nanotube is an electrically conductive material, and in order to commercialize it, it needs to be prepared in a dispersion state rather than a powder state. However, there is a problem that carbon nanotubes have strong agglomeration characteristics, making it difficult to lower their viscosity when prepared as a dispersion, and even if the viscosity is lowered, the viscosity is rapidly increased over time, making it difficult to apply in actual processes.

In order to solve these problems, a method of dispersing carbon nanotubes in a dispersion medium through mechanical dispersion treatment such as ultrasonic treatment has been proposed. However, in the case of the mechanical dispersion treatment method, there is a problem that the carbon nanotubes are agglomerated as soon as the ultrasonic irradiation is ended. If carbon nanotubes are agglomerated, the coating properties are deteriorated during the process stage and it is difficult to obtain a product with a uniform thickness.

Therefore, there is a demand in the art for a technology for preparing a carbon nanotube dispersion having low viscosity and a low viscosity change rate over time. The inventors of the present invention have conducted continuous research on additives as a means to solve the above-described problems in carbon nanotube dispersion, and as a result, have completed the present invention.

### [Prior Art Document]

### [Patent Document]

(Patent Document 1) Korean Laid-open Patent Publication No. 10-2015-0122653

### [Disclosure]

### [Technical Problem]

The present invention provides a carbon nanotube dispersion, in which carbon nanotubes are efficiently dispersed by using a first dispersant comprising a first polymer compound containing an amine group and a second dispersant comprising a second polymer compound containing an aromatic ring, and its preparation method.

### [Technical Solution]

According to a first aspect of the present invention,
the present invention provides a carbon nanotube dispersion comprising carbon nanotubes, a dispersant and a solvent.

In one embodiment of the present invention, the dispersant includes a first dispersant comprising a first polymer compound containing an amine group; and a second dispersant comprising a second polymer compound containing an aromatic ring.

In one embodiment of the present invention, the second dispersant contains aromatic carbon in an amount of 65 mol.% or more based on the total mole number of carbon atoms.

In one embodiment of the present invention, the first polymer compound is selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, polyethylenimine and combinations thereof.

In one embodiment of the present invention, the second polymer compound further contains a carbonyl group, and the second dispersant has a ratio of the carbonyl group to the aromatic ring (integral average value of the carbonyl group/integral average value of the aromatic ring) of 0.2 or less according to FT-IR.

In one embodiment of the present invention, the dispersant has a Na content of 250 ppm to 500 ppm based on the total weight of the dispersant.

In one embodiment of the present invention, the dispersant has a Ca content of 0.1 ppm to 50 ppm based on the total weight of the dispersant.

In one embodiment of the present invention, the second polymer compound is lignosulfonate.

In one embodiment of the present invention, the first dispersant is contained in the carbon nanotube dispersion in an amount of 200 parts by weight to 400 parts by weight based on 100 parts by weight of the second dispersant.

In one embodiment of the present invention, the dispersant is contained in the carbon nanotube dispersion in an amount of 100 parts by weight to 300 parts by weight based on 100 parts by weight of the carbon nanotube.

In one embodiment of the present invention, the carbon nanotubes are contained in the carbon nanotube dispersion in an amount of 0.1% by weight to 5% by weight based on the total weight of the carbon nanotube dispersion.

In one embodiment of the present invention, the carbon nanotubes have a BET specific surface area of 800 m²/g to 5,000 m²/g.

In one embodiment of the present invention, the solvent is an aqueous solvent comprising water.

In one embodiment of the present invention, the carbon nanotube dispersion has an initial viscosity of 5,000 cP or less at 25°C.

In one embodiment of the present invention, the carbon nanotube dispersion has a viscosity of 10,000 cP or less after storage at 45°C for 65 hours and then cooling to 25°C.

According to a second aspect of the present invention,
the present invention provides a method for preparing the carbon nanotube dispersion as described above.

According to one embodiment of the present invention, the preparation method comprises the steps of: (1) preparing a mixture by mixing the carbon nanotubes, the first dispersant comprising the first polymer compound containing an amine group, the second dispersant comprising the second polymer compound containing an aromatic ring, and the solvent; and (2) stirring the mixture.

According to a third aspect of the present invention,
the present invention provides an electrode slurry composition for a lithium secondary battery, which comprises the carbon nanotube dispersion as described above and an electrode active material.

### [Advantageous Effects]

The carbon nanotube dispersion according to one embodiment of the present invention can effectively disperse the carbon nanotube dispersion by including the first dispersant comprising a first polymer compound containing an amine group and the second dispersant comprising a second polymer compound containing an aromatic ring.

In particular, the second dispersant can significantly reduce not only the initial viscosity of the carbon nanotube dispersion but also the rate of change in viscosity over time by containing aromatic carbon at a certain level or more.

### [Best Mode]

The embodiments provided according to the present invention can all be achieved by the following description. It should be understood that the following description describes preferred embodiments of the present invention, and that the present invention is not necessarily limited thereto.

For physical properties described in this specification, if measurement conditions and methods are not specifically described, the physical properties are measured according to measurement conditions and methods generally used by those skilled in the art.

### <Carbon nanotube dispersion>

According to one aspect of the present invention, the present invention provides a carbon nanotube dispersion comprising carbon nanotubes, dispersants and a solvent. Since carbon nanotubes have high electrical conductivity, they can be used as an electrically conductive material for lithium secondary batteries, but there is a problem that they are difficult to apply in actual processes because they are not easy to disperse. In the present invention, a carbon nanotube dispersion with improved dispersibility of carbon nanotubes is provided by utilizing the first dispersant comprising a first polymer compound containing an amine group and the second dispersant comprising a second polymer compound containing an aromatic ring as dispersants for effectively dispersing carbon nanotubes.

The carbon nanotubes can be used as a material commonly used as an electrically conductive material in the relevant technical field. The carbon nanotube is a secondary structure formed by assembling the units of carbon nanotubes to form a bundle type in whole or in part, wherein the unit of carbon nanotubes is a graphite sheet in the form of a cylinder with a nano-sized diameter and has a sp² bonding structure. At this time, depending on the angle and structure at which the graphite sheet is rolled, it can exhibit the characteristics of a conductor or semiconductor. The unit of carbon nanotubes may be classified into single-walled carbon nanotube (SWCNT), double-walled carbon nanotube (DWCNT), and multi-walled carbon nanotube (MWCNT) depending on the number of bonds forming the wall.

The term 'bundle type' used in the present specification, unless otherwise stated, refers to a secondary shape in the form of a bundle or rope in which multiple units of carbon nanotubes are arranged in a parallel manner with the longitudinal axes of the units substantially in the same orientation or are twisted or entangled after being arranged. In addition, the term 'non-bundle type or entangled type' refers to the form in which the units of carbon nanotubes are entangled without a specific shape such as a bundle or rope.

The carbon nanotubes have high conductivity, but have high agglomeration characteristics due to the van der Waals force that occurs between carbon nanotubes. If the electrically conductive materials are agglomerated, since conductive paths cannot be properly formed, and relatively more electrically conductive materials are used, the amount of active materials are decreased, and thus the performance of the electrode may be actually deteriorated. Therefore, it has been difficult to commercialize carbon nanotubes as an electrically conductive material.

The carbon nanotube dispersion according to the present invention can significantly reduce the viscosity of an aqueous carbon nanotube dispersion and suppress changes over time by comprising the first dispersant comprising a first polymer compound containing an amine and the second dispersant comprising a second polymer compound containing an aromatic ring, so that when applied to an electrode slurry for a lithium secondary battery, it can exhibit high conductivity due to the high conductivity of the carbon nanotube.

Specifically, if the carbon nanotube dispersion according to the present invention is applied to the preparation of electrode slurry, the carbon nanotubes are uniformly positioned between active materials, so that the microscopic space between the electrode active materials can be maintained uniformly even during the process of manufacturing an electrode by coating and drying the electrode slurry and then rolling it. In addition, since the carbon nanotubes are uniformly distributed without agglomeration, conductive paths can be sufficiently formed even with a small amount of carbon nanotubes.

The carbon nanotube dispersion according to one embodiment of the present invention may comprise at least one of single-walled, double-walled, and multi-walled carbon nanotube units as the carbon nanotube, and specifically may comprise a single-walled carbon nanotube. Since the single-walled carbon nanotube has a higher specific surface area than the double-walled and multi-walled carbon nanotubes, it can be helpful in improving the performance of a lithium secondary battery when used as an electrically conductive material for the battery.

According to one embodiment of the present invention, the carbon nanotubes have a diameter of 0.5 nm to 10 nm. Here, the diameter means the largest value among the distances from one point on the outermost side to another point based on the circular cross-section of the carbon nanotube. The diameter of the carbon nanotubes can be measured by photographing with a scanning electron microscope. Specifically, the diameter of the carbon nanotubes may be 0.5nm or more, 0.6nm or more, 0.7nm or more, 0.8nm or more, 0.9nm or more, 1nm or more, and may be 10nm or less, 9nm or less, 8nm or less, 7nm or less, 6nm or less, 5nm or less, and may be 0.5nm to 10nm, 0.7nm to 7nm, 1nm to 5nm. The carbon nanotubes having a diameter in the above range can be effectively dispersed in the electrode for a lithium secondary battery, thereby imparting electrical conductivity to the electrode.

According to one embodiment of the present invention, the carbon nanotubes have a length of 1 µm to 20 µm. Here, the length means the height of a cylinder-shaped carbon nanotube. The length of the carbon nanotubes can be measured by photographing with a scanning electron microscope. Specifically, the length of the carbon nanotubes may be 1 µm or more, 2 µm or more, 3 µm or more, 4 µm or more, or 5 µm or more, and may be 20 µm or less, 19 µm or less, 18 µm or less, 17 µm or less, 16 µm or less, or 15 µm or less, and may be 1 µm to 20 µm, 3 µm to 18 µm, or 5 µm to 15 µm. The carbon nanotubes having the above range of lengths can effectively connect components within the electrode for a lithium secondary battery, thereby imparting electrical conductivity to the electrode.

According to one embodiment of the present invention, the carbon nanotubes have a BET specific surface area of 800 m²/g to 5,000 m²/g. The BET specific surface area is a specific surface area measured by the BET method, and specifically, it is preferably calculated by obtaining the amount of nitrogen gas adsorbed at liquid nitrogen temperature (77K) using BELSORP-mini II of BEL Japan company. Specifically, the BET specific surface area of the carbon nanotubes may be 800 m²/g or more, 850 m²/g or more, 900 m²/g or more, 950 m²/g or more, or 1,000 m²/g, and may be 5,000 m²/g or less, 4,500 m²/g or less, 4,000 m²/g or less, 3,500 m²/g or less, 3,000 m²/g or less, 2,500 m²/g or less, or 2,000 m²/g or less, and may be 800 m²/g to 5,000 m²/g, 900 m²/g to 3,500 m²/g, or 1,000 m²/g to 2,000 m²/g. The carbon nanotubes having the BET specific surface area in the above range can effectively contact other components in the electrode for a lithium secondary battery, thereby imparting electrical conductivity to the electrode.

According to one embodiment of the present invention, the carbon nanotubes are contained in the carbon nanotube dispersion in an amount of 0.1 % by weight to 5 % by weight based on the total weight of the carbon nanotube dispersion. Specifically, the content of the carbon nanotubes may be 0.1 % by weight or more, 0.2 % by weight or more, 0.3 % by weight or more, 0.4 % by weight or more, or 0.5 % by weight or more, and may be 5 % by weight or less, 4.5 % by weight or less, 4 % by weight or less, 3.5 % by weight or less, 3 % by weight or less, 2.5 % by weight or less, 2 % by weight or less, or 1.5 % by weight or less, and may be 0.1 % by weight to 5 % by weight, 0.3 % by weight to 3 % by weight, or 0.5 % by weight to 1.5 % by weight. If the carbon nanotubes in the above carbon nanotube dispersion are controlled within the above-described range, the carbon nanotubes can be effectively dispersed, making it easy to apply to a lithium secondary battery.

The carbon nanotube dispersion according to one embodiment of the present invention includes the first dispersant and the second dispersant as well as the solvent in order to effectively disperse the carbon nanotubes described above. Since the carbon nanotube dispersion has a relatively high content of carbon nanotubes, it may be important to appropriately combine components other than the carbon nanotubes to effectively disperse the carbon nanotubes without agglomeration and to increase their utility value. On the other hand, if the content of carbon nanotubes is low, since the solid content of the prepared electrode slurry may be decreased during the preparation of the electrode slurry, the electrode slurry may become unnecessarily thick before drying, which may lead to a deterioration in the quality of the electrode after drying.

The solvent basically plays a role in dispersing the carbon nanotubes, the first dispersant, and the second dispersant. Carbon nanotubes are used as an electrically conductive material in actual products such as lithium secondary batteries, but if the carbon nanotubes are put into electrode slurry in a powdered state, the carbon nanotubes are agglomerated and cannot properly function in the electrode. In order to solve these problems, the carbon nanotubes are predispersed and then supplied into the carbon nanotube dispersion.

The solvent is not particularly limited as long as it can effectively disperse the carbon nanotubes, the first dispersant, and the second dispersant. According to one embodiment of the present invention, the solvent is an aqueous solvent comprising water. The aqueous solvent may be contained in a content that enables the electrode slurry composition to have an appropriate viscosity, taking into account the coating properties of the electrode slurry composition prepared using the carbon nanotube dispersion. Even if the content of the solvent is not specifically mentioned in this specification, the content of the solvent can be obtained by excluding the respective contents of the carbon nanotubes, the first dispersant, and the second dispersant from the carbon nanotube dispersion.

The carbon nanotube dispersion according to one embodiment of the present invention further includes a dispersant because the carbon nanotubes cannot be effectively dispersed with a solvent alone. The dispersant may be one substance, but may also be a combination of two or more substances. According to one embodiment of the present invention, the dispersant comprises a first dispersant and a second dispersant. The first dispersant and the second dispersant can be distinguished according to the content used, and the dispersant used in a larger amount among the two dispersants can be the first dispersant.

According to one embodiment of the present invention, the first dispersant comprises a first polymer compound containing an amine group. In this specification, the amine group can be most broadly interpreted as a functional group containing nitrogen. If the first polymer compound containing an amine group is used as a first dispersant, the viscosity improvement effect and the viscosity change effect over time can be obtained in the carbon nanotube dispersion. The first polymer compound may preferably be dissolved in a solvent, particularly an aqueous solvent, and may be selected from the group consisting of, for example, polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, polyethylenimine and a combination thereof.

The second dispersant described above can be a material that can produce a synergistic effect in the dispersion of carbon nanotubes together with the first dispersant described above. According to one embodiment of the present invention, the second dispersant comprises a second polymer compound containing an aromatic ring. The second dispersant described above contains an aromatic ring, but the content of carbon constituting the aromatic ring can play an important role in dispersing the carbon nanotubes in relation to the first dispersant. In addition, since the aromatic ring contained in the second dispersant has a molecular structure similar to that of carbon nanotubes, it can form a strong bond with individual carbon nanotubes through π-π interaction or hydrophobic interaction, and thus can have the functionality of dispersing the carbon nanotubes without the carbon nanotubes agglomerating with each other.

According to one embodiment of the present invention, the second dispersant contains 65 mol.% or more of aromatic carbon based on the total number of moles of carbon atoms. The aromatic carbon refers to a carbon atom constituting an aromatic ring. The content of aromatic carbon in the second dispersant can be confirmed, for example, using an NMR device. Specifically, the content of aromatic carbon was measured by 1D normal NMR (Bruker Prodigy 500MHz NMR, 13C, Probe (PABBO), D-solvent: D₂O or DMSO-d₆, temperature: 298K). Specifically, the content of aromatic carbon may be 65 mol.% or more, 65.5 mol.% or more, 66 mol.% or more, 66.5 mol.% or more, or 67 mol.% or more. The upper limit of the content of aromatic carbon can be naturally adjusted by the presence of other components in the compound, but may be, for example, 90 mol.% or less, 89 mol.% or less, 88 mol.% or less, 87 mol.% or less, 86 mol.% or less, 85 mol.% or less, or 84 mol.% or less, and may be 65 mol.% to 90 mol.%, 66 mol.% to 87 mol.%, or 67 mol.% to 84 mol.%. If the content of aromatic carbon in the second dispersant is within the above-described range, the synergy effect with the first dispersant can be maximized.

According to one embodiment of the present invention, if the second polymer compound is analyzed for an aromatic ring using an FT-IR device, the integral average value is 20 to 150. A specific analysis method and device for deriving the integral average value may follow the description of the following examples. Specifically, the integral average value of the aromatic ring may be 20 or more, 25 or more, 30 or more, 35 or more, or 40 or more, and may be 150 or less, 140 or less, 130 or less, 120 or less, or 110 or less, and may be 20 to 150, 30 to 130, or 40 to 110. The second polymer compound can be further specified within the above-described range.

According to one embodiment of the present invention, the second polymer compound further contains a carbonyl group. The ratio of the carbonyl group to the aromatic ring in the second dispersant can play an important role in dispersing carbon nanotubes in relation to the first dispersant. According to one embodiment of the present invention, the second dispersant has a ratio of the carbonyl group and the aromatic ring (integral average value of the carbonyl group/integral average value of the aromatic ring) of 0.2 or less when analyzed with an FT-IR device for the carbonyl group (C=O) and the aromatic ring. Specific analysis methods and devices for deriving the integral average value may follow the description of the following examples. The integration is performed over a region generally known in the art. For example, with 1,800 cm-⁻¹ and 900 cm-⁻¹ as the baseline, the carbonyl group is integrated in the region of 1,738 cm-⁻¹ to 1,675 cm-⁻¹, and the aromatic ring is integrated in the region of 1,523 cm-⁻¹ to 1,478 cm-⁻¹. Specifically, the ratio of the carbonyl group and the aromatic ring (integral average value of the carbonyl group/integral average value of the aromatic ring) may be 0.2 or less, 0.05 to 0.2, 0.06 to 0.2, 0.07 to 0.2, or 0.08 to 0.2. If the ratio of the carbonyl group and the aromatic ring in the second dispersant is within the above-described range, the synergy effect with the first dispersant can be maximized.

According to one embodiment of the present invention, the second polymer compound has an integral average value of 1 to 50 when analyzed with an FT-IR device for the C=O functional group. Specifically, the integral average value of the C=O functional group may be 1 or more, 2 or more, or 3 or more, and 50 or less, 45 or less, 40 or less, 35 or less, or 30 or less, and may be 1 to 50, 2 to 40, or 3 to 30. The second polymer compound may be further specified within the above-described range.

According to one embodiment of the present invention, the second polymer compound further contains a sulfone group and a hydroxyl group in addition to the aromatic ring and the carbonyl group. The sulfone group and hydroxyl group in the second polymer compound according to one embodiment of the present invention do not have a high content compared to the aromatic ring, but they can play an auxiliary role in forming the structure of the second polymer compound and in interacting with the carbon nanotubes and the first dispersant.

According to one embodiment of the present invention, the second polymer compound has an integral average value of 50 to 250 when analyzed with an FT-IR device for the S=O functional group. Specifically, the integral average value of the S=O functional group may be 50 or more, 60 or more, 70 or more, 80 or more, 90 or more, 100 or more, or 110 or more, and may be 250 or less, 240 or less, 230 or less, 220 or less, or 210 or less, and may be 50 to 250, 80 to 230, or 110 to 210. The second polymer compound can be further specified within the above-described range.

According to one embodiment of the present invention, the second polymer compound has an integral average value of 500 to 1,000 when analyzed with an FT-IR device for the O-H functional group. Specifically, the integral average value of the O-H functional group may be 500 or more, 525 or more, 550 or more, 575 or more, or 600 or more, and may be 1,000 or less, 990 or less, 980 or less, 970 or less, 960 or less, or 950 or less, and may be 500 to 1,000, 550 to 970, or 600 to 950. The second polymer compound can be further specified within the above-described range.

According to one embodiment of the present invention, the second polymer compound further contains an alkoxy group in addition to the functional group described above. According to one embodiment of the present invention, the second polymer compound has an integral average value of 1 to 30 when analyzed with an FT-IR device for the CH₃O- functional group. Specifically, the integral average value of the CH₃O-functional group may be 1 or more, 2 or more, or 3 or more, and may be 30 or less, 29 or less, 28 or less, 27 or less, 26 or less, 25 or less, 24 or less, 23 or less, 22 or less, 21 or less, or 20 or less, and may be 1 to 30, 2 to 25, or 3 to 20. The second polymer compound can be further specified within the above-described range.

In addition, according to one embodiment of the present invention, the second polymer compound has an integral average value of 1 to 50 when analyzed with an FT-IR device for C-H, which is the basis of the organic compound. Specifically, the integral average value of C-H may be 1 or more, 5 or more, or 10 or more, and may be 50 or less, 45 or less, 40 or less, 35 or less, or 30 or less, and may be 1 to 50, 5 to 40, or 10 to 30. The second polymer compound can be further specified within the above-described range.

According to one embodiment of the present invention, the second polymer compound is lignosulfonate. The lignosulfonate is a derivative of lignin and is a salt of lignosulfonic acid obtained by converting lignin using sulfurous acid or sulfite. The salt of the lignosulfonic acid may contains sodium, ammonium, calcium, magnesium, etc. depending on the base that neutralizes the lignosulfonic acid during the preparation process. The lignosulfonate may be suitable for use as a dispersant of a carbon nanotube dispersion since it is a soluble substance in an aqueous solvent.

Lignin, which is the starting material of the above lignosulfonate, is an abundant renewable polymer found in nature, and is a material characterized by being rich in cellulose but having superior chemical stability, etc. due to its aromatic structure compared to cellulose. Since the structure of lignin is very diverse and cannot be clearly specified and lignosulfonate is a derivative of lignin, the structure of lignosulfonate also cannot be clearly specified. However, since the lignosulfonate according to the present invention contains an aromatic ring, a sulfonic group, a hydroxyl group, and a carbonyl group, and the content of aromatic carbon is at a certain level or higher, lignosulfate suitable for the present invention can be selected from among various lignosulfonates.

The dispersant including the first dispersant and the second dispersant may include Na (sodium). The Na may play an important role in dispersing the carbon nanotubes when present in a specific range of content. According to one embodiment of the present invention, the dispersant has a Na content of 250 ppm to 500 ppm based on the total weight of the dispersant. The Na content can be determined by a method commonly used in the relevant technical field, and for example, a specific analysis method and device for deriving the Na content can follow the description of the following examples. Specifically, the Na content may be 250ppm or more, 260ppm or more, 270ppm or more, 280ppm or more, 290ppm or more, or 300ppm or more, and may be 500ppm or less, 490ppm or less, 480ppm or less, 470ppm or less, 460ppm or less, or 450ppm or less, and may be 250ppm to 500ppm, 270ppm to 470ppm, or 300ppm to 450ppm. If the Na content in the dispersant is within the above-described range, the functionality of the dispersant for dispersing the carbon nanotubes can be further improved.

The dispersant including the first dispersant and the second dispersant may include Ca (calcium). The Ca may play an important role in dispersing the carbon nanotubes when present in a specific range of content. According to one embodiment of the present invention, the dispersant has a Ca content of 0.1 ppm to 50 ppm based on the total weight of the dispersant. It can be measured in the same manner as in the Na described above. Specifically, the Ca content may be 0.1ppm or more, 0.5ppm or more, or 1ppm or more, and may be 50ppm or less, 40ppm or less, 30ppm or less, 20ppm or less, or 10ppm or less, and may be 0.1ppm to 50ppm, 0.5ppm to 30ppm, or 1ppm to 10ppm. If the Ca content in the dispersant is within the above-described range, the functionality of the dispersant for dispersing the carbon nanotubes can be further improved.

The dispersants described above, when used in an appropriate ratio, can effectively disperse the carbon nanotubes in the carbon nanotube dispersion while increasing the content of the carbon nanotubes. According to one embodiment of the present invention, the dispersants are contained in the carbon nanotube dispersion in an amount of 100 parts by weight to 300 parts by weight based on 100 parts by weight of the carbon nanotubes. Here, the content of the dispersants means the sum of the content of the first dispersant and the content of the second dispersant. Specifically, the content of the dispersants may be 100 parts by weight or more, 110 parts by weight or more, 120 parts by weight or more, 130 parts by weight or more, 140 parts by weight or more, or 150 parts by weight or more, and may be 300 parts by weight or less, 290 parts by weight or less, 280 parts by weight or less, 270 parts by weight or less, 260 parts by weight or less, 250 parts by weight or less, 240 parts by weight or less, 230 parts by weight or less, 220 parts by weight or less, 210 parts by weight or less, or 200 parts by weight or less, and may be 100 parts by weight to 300 parts by weight, 130 parts by weight to 250 parts by weight, 150 parts by weight to 200 parts by weight. By controlling the content of the dispersant to the above-described ratio, the carbon nanotubes can be effectively dispersed without excessively increasing the content of the dispersants.

According to one embodiment of the present invention, the first dispersant is contained in the carbon nanotube dispersion in an amount of 200 parts by weight to 400 parts by weight based on 100 parts by weight of the second dispersant. As described above, since the naming of the first dispersant and the second dispersant is based on the content of the dispersants, the content of the first dispersant can be basically the same as or greater than the content of the second dispersant. Specifically, the content of the first dispersant may be 200 parts by weight or more, 210 parts by weight or more, 220 parts by weight or more, 230 parts by weight or more, 240 parts by weight or more, or 250 parts by weight or more, and may be 400 parts by weight or less, 390 parts by weight or less, 380 parts by weight or less, 370 parts by weight or less, 360 parts by weight or less, or 350 parts by weight or less, and may be 200 parts by weight to 400 parts by weight, 230 parts by weight to 370 parts by weight, or 250 parts by weight to 350 parts by weight. If the first dispersant and the second dispersant are used in combination, when used in the above ratio, the carbon nanotubes can be effectively dispersed compared to the same total amount of the dispersants.

The carbon nanotube dispersion according to the present invention has excellent dispersibility for the carbon nanotubes. This dispersibility can be confirmed through the viscosity of the carbon nanotube dispersion. According to one embodiment of the present invention, the carbon nanotube dispersion has an initial viscosity of 5,000 cP or less at 25 °C. Here, the initial viscosity refers to the viscosity value measured directly for the carbon nanotube dispersion manufactured after stirring the mixture. The specific measurement method for viscosity can follow the method described in Experimental Examples below. The initial viscosity may be 5,000 cP or less, 4,900 cP or less, 4,800 cP or less, 4,700 cP or less, 4,600 cP or less, 4,500 cP or less, 4,400 cP or less, or 4,300 cP or less. Since there is a limit to the reduction in viscosity while containing a certain amount of the carbon nanotubes in the carbon nanotube dispersion, the lower limit may not be particularly important. The lower limit of the initial viscosity may be, for example, 3,000 cP or more, 3,100 cP or more, 3,200 cP or more, 3,300 cP or more, 3,400 cP or more, 3,500 cP or more, or 3,600 cP or more.

According to one embodiment of the present invention, the carbon nanotube dispersion has a viscosity of 10,000 cP or less after being stored at 45°C for 65 hours and cooled to 25°C. A specific method for measuring the viscosity can follow the method described in Experimental Examples below. The viscosity may be 10,000 cP or less, 9,000 cP or less, 8,000 cP or less, 7,000 cP or less, 6,000 cP or less, or 5,000 cP or less. Since there is a limit to the reduction in viscosity after being stored at 45°C for 65 hours and cooled to 25°C, while containing a certain amount of the carbon nanotubes in the carbon nanotube dispersion, the lower limit may not be particularly important. The lower limit of the initial viscosity may be, for example, 3,000 cP or more, 3,100 cP or more, 3,200 cP or more, 3,300 cP or more, 3,400 cP or more, or 3,500 cP or more.

According to one embodiment of the present invention, the carbon nanotube dispersion has a viscosity change rate of 1.5 or less. The viscosity change rate is a value obtained by dividing the viscosity after being stored at 45°C for 65 hours and cooled to 25°C by the initial viscosity at 25°C. Specifically, the viscosity change rate may be 1.5 or less, 1.4 or less, 1.3 or less, 1.2 or less, or 1.1 or less, and may be 0.8 or more, 0.85 or more, or 0.9 or more.

As described above, the carbon nanotube dispersion according to one embodiment of the present invention not only has a low initial viscosity, but also has a small rate of change in viscosity even after storage for a certain period of time under specific conditions, thereby having stable dispersibility.

### <Preparation method of carbon nanotube dispersion>

According to one aspect of the present invention, the present invention provides a method for preparing the carbon nanotube dispersion described above. According to one embodiment of the present invention, the method for preparing the carbon nanotube dispersion comprises the steps of (1) preparing a mixture by mixing the carbon nanotubes, the first dispersant comprising the first polymer compound containing the amine group, the second dispersant comprising the second polymer compound containing an aromatic ring, and a solvent; and (2) stirring the mixture.

In step (1), the mixing can be performed under temperature conditions in which the physical properties of the mixture, including viscosity, do not change due to evaporation of the solvent. For example, it can be performed at a temperature of 50°C or less, specifically, 5°C to 50°C.

In step (2), the stirring can be performed by an impeller, milling or a high-pressure homogenizer. The milling can be performed by a method such as a ball mill, a bead mill, a disc mill or a basket mill, and specifically, can be performed by a disc mill.

In the milling by the disk mill, the size of the beads can be appropriately determined depending on the type and amount of the carbon nanotubes and the type of the dispersant, and specifically, the diameter of the beads may be 0.1 mm to 5 mm, and more specifically, 0.5 mm to 4 mm. In addition, the bead milling process can be performed at a speed of 2,000 rpm to 10,000 rpm, and more specifically, at a speed of 5,000 rpm to 9,000 rpm.

The stirring by the high-pressure homogenizer is accomplished by pressurizing the mixture with, for example, a plunger pump of the high-pressure homogenizer and pushing it out through the gap of a valve for homogenization, and thereby causing forces such as cavitation, shear, impact and explosion when the mixture passes through the gap.

The stirring process as described above can be performed depending on the degree of dispersion of the carbon nanotube dispersion, and specifically can be performed for 30 to 120 minutes, more specifically for 60 to 90 minutes.

The method for preparing the carbon nanotube dispersion according to one embodiment of the present invention comprises the steps of (1) preparing a first mixture by mixing a first dispersant comprising a first polymer compound containing an amine group, a second dispersant comprising a second polymer compound containing an aromatic ring, and a solvent; (2) preparing a second mixture by mixing carbon nanotubes into the first mixture; and (3) stirring the second mixture. In the step (1), separate stirring may be performed to prepare the first mixture. However, since the first mixture is not used to prepare a final product, it may be performed under simpler conditions compared to the stirring in step (3).

### <Electrode slurry composition>

According to one aspect of the present invention, the present invention provides an electrode slurry composition for a lithium secondary battery comprising the carbon nanotube dispersion and an electrode active material. The electrode slurry composition for the lithium secondary battery may be a positive electrode slurry composition or a negative electrode slurry composition, and specifically, may be a negative electrode slurry composition. The electrode slurry composition for the lithium secondary battery may comprise the carbon nanotube dispersion, an electrode active material as a positive electrode active material or a negative electrode active material, a binder, and a solvent and/or other additives as needed.

As the positive electrode active material, positive electrode active materials well known in the art can be used without limitation, and for example, lithium cobalt-based oxide, lithium nickel-based oxide, lithium manganese-based oxide, lithium iron phosphorus oxide, lithium nickel manganese cobalt-based oxide or a combination of these, etc. may be used. Specifically, LiCoO₂, LiNiO₂, LiMn₂O₄, LiCoPO₄, LiFePO₄ and LiNiₐMn_{b}Co_{c}O₂ (wherein, 0 < a, b, c < 1) can be used as the positive electrode active material, but is not limited thereto.

The negative electrode active material may comprise one or more negative electrode active materials selected from the group consisting of natural graphite, artificial graphite, carbonaceous material; lithium-containing titanium composite oxide (LTO), metals (Me) of Si, Sn, Li, Zn, Mg, Cd, Ce, Ni or Fe; alloys composed of the metals (Me); oxides (MeOx) of the metals (Me); and a composite of the metals (Me) and carbon. The negative electrode active material may be contained in an amount of 60 to 98 % by weight, more preferably 70 to 98 % by weight, based on the total weight of solids excluding the solvent in the negative electrode slurry.

The binder is a component that assists in the bonding of the active material and the electrically conductive material and the bonding to the current collector, and is typically added in an amount of 1 to 30 % by weight based on the total weight of the mixture comprising the electrode active material.

Examples of such binders may comprise polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluorine rubber, various copolymers, etc.

The solvent may comprise organic solvents such as N-methyl pyrrolidone (NMP), dimethyl formamide (DMF), acetone, dimethyl acetamide, etc., or water, and these solvents may be used alone or in a mixture of two or more. The amount of solvent used is sufficient if it can dissolve and disperse the electrode active material, the binder, and the electrically conductive material by taking into account the coating thickness of the slurry and the preparation yield.

The viscosity modifier may be carboxymethyl cellulose, polyacrylic acid, or the like, and the viscosity of the electrode slurry may be adjusted by addition thereof to facilitate the preparation of the electrode slurry and the application process on the electrode current collector.

The filler is optionally used as a component that suppresses the expansion of the electrode, and is not particularly limited as long as it is a fibrous material that does not cause chemical changes to the battery, and for example, olefin polymers such as polyethylene and polypropylene; fibrous materials such as glass fiber and carbon fiber are used.

If the electrode slurry composition is a composition of positive electrode slurry for forming a positive electrode, the composition of the positive electrode slurry can be applied onto a positive electrode current collector, and then dried and rolled to manufacture the positive electrode. Alternatively, it may also be manufactured by casting the positive electrode slurry on a separate support, peeling it off from the support to obtain a film, and laminating it on the positive electrode current collector.

The thickness of the positive electrode active material layer formed by the positive electrode slurry may vary depending on the loading amount, loading speed, etc. for applying the positive electrode slurry.

The positive electrode current collector generally has a thickness of 3 µm to 500 µm. The positive electrode current collector is not particularly limited as long as it has high electrical conductivity without causing chemical changes in the relevant battery. For example, stainless steel, aluminum, nickel, titanium, sintered carbon, or aluminum or stainless steel whose surface is treated with carbon, nickel, titanium, silver or the like may be used. In addition, the positive electrode current collector can have minute irregularities formed on its surface to enhance the bonding force with the positive electrode active material, and may be formed in various forms such as film, sheet, foil, net, porous body, foam, nonwoven fabric or the like.

If the electrode slurry composition is a composition of negative electrode slurry for forming a negative electrode, the negative electrode can be manufactured by applying the composition of the negative electrode slurry onto a negative electrode current collector, followed by drying and rolling. Alternatively, it may also be manufactured by casting the negative electrode slurry on a separate support, peeling it off from the support to obtain a film, and laminating it on the negative electrode current collector.

The thickness of the negative electrode active material layer formed by the negative electrode slurry may vary depending on the loading amount, loading speed, etc. for applying the negative electrode slurry.

The negative electrode current collector generally has a thickness of 3 µm to 500 µm. This negative electrode current collector is not particularly limited as long as it has high electrical conductivity without causing chemical changes in the relevant battery. For example, copper, stainless steel, aluminum, nickel, titanium, sintered carbon, or copper or stainless steel whose surface is treated with carbon, nickel, titanium, silver or the like, or aluminum-cadmium alloy may be used. In addition, as with the positive electrode current collector, the negative electrode current collector can have minute irregularities formed on its surface to enhance the bonding force with the negative electrode active material, and may be formed in various forms such as film, sheet, foil, net, porous body, foam, nonwoven fabric or the like.

### <Lithium secondary battery>

According to one aspect of the present invention, the present invention provides a lithium secondary battery comprising a positive electrode, a negative electrode, a separator disposed between the positive electrode and the negative electrode, and an electrolyte solution, while utilizing the above-described carbon nanotube dispersion. Since the positive electrode and negative electrode are the same as those described above, their detailed description is omitted.

The separator separates the negative electrode and the positive electrode and provides a passage for lithium ions to move. The separator can be used without any particular limitation as long as it is usually used as a separator in a lithium secondary battery. As the separator, it is particularly preferable to have low resistance to ion movement of the electrolyte and excellent electrolyte solution impregnation ability. Specifically, a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, etc. or a laminated structure of two or more layers thereof may also be used. In addition, a conventional porous nonwoven fabric, for example, a nonwoven fabric made of high melting point glass fiber, polyethylene terephthalate fiber, etc. may be used. In addition, a coated separator containing a ceramic component or a polymer material may be used to secure heat resistance or mechanical strength, and the separator may be selectively used in a single-layer or multi-layer structure.

The electrolyte may comprise, but is not limited to, an organic liquid electrolyte, an inorganic liquid electrolyte, a solid polymer electrolyte, a gel-type polymer electrolyte, a solid inorganic electrolyte, and a molten-type inorganic electrolyte, which can be used in the manufacture of a lithium secondary battery. Specifically, the electrolyte may comprise an organic solvent and a lithium salt.

The organic solvent may be used without any particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvents such as dibutyl ether or tetrahydrofuran; a ketone-based solvent such as cyclohexanone; an aromatic hydrocarbon-based solvent such as benzene, or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; nitriles such as R-CN(R is a C2 to C20 linear, branched or cyclic hydrocarbon group, and may include a double bond aromatic ring or an ether bond); amides such as dimethylformamide; dioxolanes such as 1,3-dioxolane; or sulfolanes. Among them, the carbonate-based solvent is preferable, and a mixture of the cyclic carbonate having high ionic conductivity and high dielectric constant that can increase the charge/discharge performance of the battery (e.g., ethylene carbonate or propylene carbonate, etc.) and the linear carbonate-based compound having a low viscosity (e.g., ethylmethyl carbonate, dimethyl carbonate or diethyl carbonate, etc.) is more preferred. In this case, when the cyclic carbonate and the chain carbonate are mixed in a volume ratio of about 1:1 to about 1:9, the performance of the electrolyte may be excellent.

The lithium salt may be used without particular limitation as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂. The concentration of the lithium salt is preferably used within the range of 0.1 to 2.0M. If the concentration of the lithium salt is in the above range, since the electrolyte has appropriate conductivity and viscosity, excellent electrolyte performance can be exhibited, and lithium ions can move effectively.

In the electrolyte, in addition to the electrolyte components described above, for the purpose of improving the lifetime characteristics of the battery, suppressing the decrease in the capacity of the battery, and improving the discharging capacity of the battery, for example, one or more additives such as haloalkylene carbonate-based compounds such as difluoroethylene carbonate, pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol or aluminum trichloride may be further comprised. In this case, the additive may be contained in an amount of 0.1 to 5% by weight based on the total weight of the electrolyte.

The lithium secondary battery comprising the electrode manufactured using the carbon nanotube dispersion according to the present invention, specifically, the lithium secondary battery comprising the negative electrode manufactured using the carbon nanotube dispersion, can stably exhibit excellent discharging capacity and output characteristics because carbon nanotubes are uniformly dispersed within the negative electrode and the content thereof can be reduced compared to cases where electrically conductive materials such as conventional carbon black are included. As a result, it is useful in the field of portable devices such as cellular phones, notebook computers, and digital cameras, and electric vehicles such as a hybrid electric vehicle (HEV).

Accordingly, according to another embodiment of the present invention, a battery module comprising the lithium secondary battery as a unit cell and a battery pack comprising the same may be provided.

The battery module or battery pack may be used as a power source for any one or more medium- and large-sized devices of a power tool; an electric vehicle comprising an electric vehicle (EV), a hybrid electric vehicle, and a plug-in hybrid electric vehicle (PHEV); or a power storage system, etc.

Hereinafter, specific examples of the present invention are presented. However, the examples described below are only for specifically illustrating or explaining the present invention, and the present invention is not limited thereto.

### Examples (Preparation of carbon nanotube dispersion)

The lignosulfonates used in the Examples and Comparative Examples have integral average values as shown in Table 1 below when the functional groups are analyzed (analysis accessory: Golden Gate ATR accessory (diamond crystal) from Specac company, analysis conditions: 8 resolution, 32 scans) using an FT-IR device (manufacturer: Agilent, product name: Cary 620-FTIR).

**[Table 1]**

| Lignosulfonate | Integral average value | | | | | |
|---|---|---|---|---|---|---|
| | aromatic ring | S=O | O-H | CH₃O- | C=O | C-H |
| 1 | 76.20 | 186.65 | 835.50 | 13.98 | 6.73 | 29.74 |
| 2 | 65.74 | 183.05 | 821.03 | 8.35 | 13.64 | 17.16 |
| 3 | 44.84 | 194.95 | 905.41 | 10.50 | 22.05 | 22.95 |
| 4 | 50.95 | 197.26 | 751.44 | 8.59 | 8.66 | 19.36 |
| 5 | 97.59 | 119.52 | 755.44 | 7.52 | 19.08 | 19.85 |
| 6 | 45.45 | 204.35 | 890.32 | 10.52 | 26.94 | 22.61 |
| 7 | 66.47 | 164.60 | 713.05 | 9.65 | 10.55 | 19.71 |
| 8 | 103.33 | 118.74 | 736.12 | 8.57 | 18.63 | 21.14 |
| 9 | 48.09 | 195.78 | 911.22 | 10.17 | 19.33 | 21.74 |
| 10 | 100.11 | 121.97 | 638.78 | 6.71 | 14.84 | 17.68 |

### Example 1

A carbon nanotube dispersion having a total weight of 500 g was prepared by the following method. 3.375 g (0.675 wt.%) of polyvinylpyrrolidone (PVP K15 product of Zhangzhou Huafu Chemical Co., Ltd.) as the first dispersant, 1.125 g (0.225 wt.%) of the first lignosulfonate (Aromatic carbon content: 75 mol.%, Integral average value of carbonyl group/integral average value of aromatic ring: 0.0882) as the second dispersant, and 492.5 g of water as a solvent were mixed to prepare 497 g of a first mixture. Here, the total Na content in the first dispersant and the second dispersant was 329 ppm, and the total Ca content was 3 ppm. The above Na content and Ca content were measured using an ICP-OES device (Manufacturer: Perkin-eimer, product name: Optima 8300DV) (Operating conditions: RF power (W): 1,300, Torch Height (mm): 15.0, Plasma Gas Flow (L/min): 15.00, Sample Gas Flow (L/min): 0.8, Aux. Gas Flow (L/min): 0.20, Pump Speed (mL/min): 1.5). Specifically, these were measured after being dispersed and diluted in tertiary ultrapure water, and the experimental detection limit (Method detection limit) was <5 mg/kg. The first mixture was prepared by installing an impeller and a vessel in a dissolution tank (Dispermat-CA product from VMA-Getzmann company), adding the dispersant and the solvent, and stirring at 400 rpm for 10 minutes. 3.0 g (0.6 wt.%) of single-walled carbon nanotubes (BET specific surface area: 1,160 m²/g, Length: 5 µm or more, TUBALL product from OCSoAl company) were added to the prepared first mixture and stirred at 8,000 rpm for 60 minutes to prepare a second mixture. The prepared second mixture was homogeneously dispersed 7 times at 20,000 psi using a high-pressure disperser (PICOMAX product of Micronox company) to prepare a carbon nanotube dispersion.

### Example 2

The carbon nanotube dispersion was prepared in the same manner as Example 1, except that the fourth lignosulfonate (Aromatic carbon content: 74 mol.%, integral average value of carbonyl group/integral average value of aromatic ring: 0.1700) was used as the second dispersant, and the total content of Na in the first dispersant and the second dispersant was 396 ppm, and the total content of Ca was 3 ppm.

### Example 3

The carbon nanotube dispersion was prepared in the same manner as Example 1, except that the fifth lignosulfonate (Aromatic carbon content: 81 mol.%, integral average value of carbonyl group/integral average value of aromatic ring: 0.1956) was used as the second dispersant, and the total content of Na in the first dispersant and the second dispersant was 302 ppm, and the total content of Ca was 3 ppm.

### Example 4

The carbon nanotube dispersion was prepared in the same manner as Example 1, except that the seventh lignosulfonate (Aromatic carbon content: 67 mol.%, integral average value of carbonyl group/integral average value of aromatic ring: 0.1586) was used as the second dispersant, and the total content of Na in the first dispersant and the second dispersant was 412 ppm, and the total content of Ca was 4 ppm.

### Example 5

The carbon nanotube dispersion was prepared in the same manner as Example 1, except that the eighth lignosulfonate (Aromatic carbon content: 84 mol.%, integral average value of carbonyl group/integral average value of aromatic ring: 0.1804) was used as the second dispersant, and the total content of Na in the first dispersant and the second dispersant was 311 ppm, and the total content of Ca was 3 ppm.

### Example 6

The carbon nanotube dispersion was prepared in the same manner as Example 1, except that the tenth lignosulfonate (Aromatic carbon content: 82 mol.%, integral average value of carbonyl group/integral average value of aromatic ring: 0.1483) was used as the second dispersant, and the total content of Na in the first dispersant and the second dispersant was 315 ppm, and the total content of Ca was 3 ppm.

### Comparative Example 1

The carbon nanotube dispersion was prepared in the same manner as Example 1, except that the second dispersant was not used, and only 4.5 g (0.9 wt.%) of the first dispersant was used, and the total content of Na in the first dispersant was 129 ppm, and the total content of Ca was 3 ppm.

### Comparative Example 2

The carbon nanotube dispersion was prepared in the same manner as Example 1, except that the second lignosulfonate (Aromatic carbon content: 51 mol.%, integral average value of carbonyl group/integral average value of aromatic ring: 0.2075) was used as the second dispersant, and the total content of Na in the first dispersant and the second dispersant was 129 ppm, and the total content of Ca was 177 ppm.

### Comparative Example 3

The carbon nanotube dispersion was prepared in the same manner as Example 1, except that the third lignosulfonate (Aromatic carbon content: 63 mol.%, integral average value of carbonyl group/integral average value of aromatic ring: 0.4917) was used as the second dispersant, and the total content of Na in the first dispersant and the second dispersant was 147 ppm, and the total content of Ca was 159 ppm.

### Comparative Example 4

The carbon nanotube dispersion was prepared in the same manner as Example 1, except that the sixth lignosulfonate (Aromatic carbon content: 58 mol.%, integral average value of carbonyl group/integral average value of aromatic ring: 0.5928) was used as the second dispersant, and the total content of Na in the first dispersant and the second dispersant was 167 ppm, and the total content of Ca was 102 ppm.

### Comparative Example 5

The carbon nanotube dispersion was prepared in the same manner as Example 1, except that the ninth lignosulfonate (Aromatic carbon content: 62 mol.%, integral average value of carbonyl group/integral average value of aromatic ring: 0.4098) was used as the second dispersant, and the total content of Na in the first dispersant and the second dispersant was 153 ppm, and the total content of Ca was 105 ppm.

### Experimental Example

The viscosity (initial, 25°C) of the carbon nanotube dispersion prepared according to the Examples 1 to 6 and Comparative Examples 1 to 5 was measured, and then the viscosity after being stored at 45°C for 65 hours and cooled to 25°C was measured, and the results are shown in Table 2 below. The viscosity was measured using a viscometer (viscometer TV-25 product of TOKISANGYO company) at 25°C, 1 rpm, and Rotor Code 01.

**[Table 2]**

| | Second dispersant | Viscosity (25°C) | | |
|---|---|---|---|---|
| | | 25°C initial (cP) | After 45°C 65h and then cooling (cP) | Ratio** |
| Example 1 | first lignosulfonate | 4,200 | 3,790 | 0.90 |
| Example 2 | fourth lignosulfonate | 4,250 | 4,160 | 0. 98 |
| Example 3 | fifth lignosulfonate | 3, 800 | 3,710 | 0.98 |
| Example 4 | seventh lignosulfonate | 4,060 | 3,820 | 0.94 |
| Example 5 | eighth lignosulfonate | 3, 840 | 3,590 | 0.93 |
| Example 6 | tenth lignosulfonate | 3, 660 | 3,830 | 1.05 |
| Comparative Example 1 | -* | 9, 790 | 15,200 | 1.55 |
| Comparative Example 2 | second lignosulfonate | 7,200 | 16,410 | 2.28 |
| Comparative Example 3 | third lignosulfonate | 5, 910 | 17,760 | 3.01 |
| Comparative Example 4 | sixth lignosulfonate | 5,460 | 22, 990 | 4.21 |
| Comparative Example 5 | ninth lignosulfonate | 6,020 | 12,400 | 2.06 |
| * In Comparative Example 1, instead of not using the second dispersant, the amount of the first dispersant equal to the amount of | | | | |
| the second dispersant was additionally used. | | | | |
| ** (viscosity after 45°C 65h and then cooling) /(25°C initial viscosity) | | | | |

According to Table 2 above, it can be confirmed that the content of aromatic carbon in the second dispersant affects the viscosity of the carbon nanotube dispersion. Specifically, when the aromatic carbon content in the second dispersant was less than 65 mol.%, the initial viscosity of the carbon nanotube dispersion exceeded 5,000 cP, and the viscosity after being stored at 45°C for 65 hours and cooled to 25°C also exceeded 10,000 cP, and the viscosity change ratio also exceeded 2.0, which indicate that the effect of improving the dispersibility obtained by adding the second dispersant was insignificant. On the other hand, when the aromatic carbon content in the second dispersant was 65 mol.% or more, the initial viscosity of the carbon nanotube dispersion did not exceed 5,000 cP, and also the viscosity after being stored at 45°C for 65 hours and cooled to 25°C did not exceed 5,000 cP, which indicate that the dispersibility was remarkably improved.

It can be confirmed that the ratio of carbonyl groups and aromatic rings in the second dispersant affects the viscosity change rate of the carbon nanotube dispersion. Specifically, when the integral average value of the carbonyl group/integral average value of the aromatic ring in the second dispersant exceeded 0.2, the initial viscosity exceeded 5,000 cP, and the viscosity after being stored at 45°C for 65 hours and cooled to 25°C also exceeded 10,000 cP, and the viscosity change ratio also exceeded 2.0, which indicate that the effect of improving the dispersibility obtained by adding the second dispersant was insignificant. On the other hand, when the integral average value of the carbonyl group/integral average value of the aromatic ring in the second dispersant was 0.2 or less, the initial viscosity of the carbon nanotube dispersion did not exceed 5,000 cP, and also the viscosity after being stored at 45°C for 65 hours and cooled to 25°C also did not exceed 5,000 cP, which indicate that the dispersibility was remarkably improved. In the second dispersant, the carbon content of most of the other functional groups was not particularly related to the dispersibility of the carbon nanotube dispersion.

It can be confirmed that the Na content or Ca content in the dispersant affects the viscosity change rate of the carbon nanotube dispersion. Specifically, when the Na content in the dispersant (including the second dispersant) was less than 250 ppm or the Ca content exceeded 50 ppm, the initial viscosity exceeded 5,000 cP, and the viscosity after being stored at 45°C for 65 hours and cooled to 25°C exceeded 10,000 cP, and the viscosity change ratio also exceeded 2.0, which indicate that the effect of improving the dispersibility obtained by adding the second dispersant was insignificant. On the other hand, when the Na content in the dispersant (including the second dispersant) was 250 ppm to 500 ppm or the Ca content was 0.1 ppm to 50 ppm, the initial viscosity of the carbon nanotube dispersion did not exceed 5,000 cP, and also the viscosity after being stored at 45°C for 65 hours and cooled to 25°C also did not exceed 5,000 cP, which indicate that the dispersibility was remarkably improved. In the dispersant, most of the metal content was not particularly related to the dispersibility of the carbon nanotube dispersion.

All simple modifications or changes in the present invention fall within the scope of the present invention, and the specific protection scope of the present invention will be clarified by the appended claims.

## Claims

1. A carbon nanotube dispersion comprising carbon nanotubes, dispersants and a solvent,
wherein the dispersants comprise a first dispersant comprising a first polymer compound containing an amine group; and a second dispersant comprising a second polymer compound containing an aromatic ring,
wherein the second dispersant contains 65 mol.% or more of aromatic carbons based on the total number of moles of carbon atoms.

2. The carbon nanotube dispersion according to claim 1, wherein the first polymer compound is selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, polyethylenimine and combinations thereof.

3. The carbon nanotube dispersion according to claim 1, wherein the second polymer compound further contains a carbonyl group, and the second dispersant has a ratio of carbonyl group to aromatic ring (integral average value of carbonyl group/integral average value of aromatic ring) of 0.2 or less according to FT-IR.

4. The carbon nanotube dispersion according to claim 1, wherein the dispersants have a Na content of 250 ppm to 500 ppm based on the total weight of the dispersants.

5. The carbon nanotube dispersion according to claim 4, wherein the dispersants have a Ca content of 0.1 ppm to 50 ppm based on the total weight of the dispersants.

6. The carbon nanotube dispersion according to claim 1, wherein the second polymer compound is lignosulfonate.

7. The carbon nanotube dispersion according to claim 1, wherein the first dispersant is contained in the carbon nanotube dispersion in an amount of 200 parts by weight to 400 parts by weight based on 100 parts by weight of the second dispersant.

8. The carbon nanotube dispersion according to claim 1, wherein the dispersants are contained in the carbon nanotube dispersion in an amount of 100 parts by weight to 300 parts by weight based on 100 parts by weight of the carbon nanotubes.

9. The carbon nanotube dispersion according to claim 1, wherein the carbon nanotubes are contained in the carbon nanotube dispersion in an amount of 0.1% by weight to 5% by weight based on the total weight of the carbon nanotube dispersion.

10. The carbon nanotube dispersion according to claim 1, wherein the carbon nanotubes have a BET specific surface area of 800 m²/g to 5,000 m²/g.

11. The carbon nanotube dispersion according to claim 1, wherein the solvent is an aqueous solvent comprising water.

12. The carbon nanotube dispersion according to claim 1, wherein the carbon nanotube dispersion has an initial viscosity of 5,000 cP or less at 25°C.

13. The carbon nanotube dispersion according to claim 1, wherein the carbon nanotube dispersion has a viscosity of 10,000 cP or less after being stored at 45°C for 65 hours and then cooled to 25°C.

14. A method for preparing the carbon nanotube dispersion according to claim 1, comprising the steps of,
(1) preparing a mixture by mixing the carbon nanotubes, the first dispersant comprising the first polymer compound containing the amine group, the second dispersant comprising the second polymer compound containing an aromatic ring, and a solvent; and
(2) stirring the mixture.

15. An electrode slurry composition for a lithium secondary battery comprising the carbon nanotube dispersion according to claim 1 and an electrode active material.
